# EUROPEAN PATENT SPECIFICATION

(11) **EP 1 272 001 B1**
(45) Date of publication and mention of the grant of the patent: **19.01.2005**
(21) Application number: 01610064.6
(22) Date of filing: 25.06.2001
(51) Int. Cl.: H04R 25/00

(54) **A hearing aid with a capacitor having a large capacitance**
Ein Hörgerät mit einem hoch kapazitiven Kondensator
Prothèse auditive avec condensateur de grande capacité

(43) Date of publication of application: 02.01.2003
(73) Proprietor: Widex A/S, 3500 Vaerloese (DK)
(72) Inventor: Andersen, Henning Haugaard, 3460 Birkeröd (DK); Toft, Ole Erik, 2605 Bröndby (DK)
(74) Representative: Raffnsöe, Knud Rosenstand

(56) References cited:
- EP-A- 0 902 547
- US-A- 4 509 193
- NEUTEBOOM H ET AL: "A DSP-BASED HEARING INSTRUMENT IC" IEEE JOURNAL OF SOLID-STATE CIRCUITS, IEEE INC. NEW YORK, US, vol. 32, no. 11, 1 November 1997 (1997-11-01), pages 1790-1806, XP000752890 ISSN: 0018-9200

## Description

The present invention relates to a hearing aid that is partly powered by a capacitor having a large capacitance.

Most hearing aids are powered by a replaceable battery. Metal-air cells, such as zinc-air cells, are commonly used to power hearing aids because of their stable output voltage during their operating period. Metal-air cells use air to activate the cell. They are activated when air, in particular oxygen, is allowed to enter the cell. Prior to use, the battery is sealed with a pull-tab that covers one or more small openings that allow air to reach an air-cathode assembly within the cell. To activate the battery, the pull-tab is removed and air is allowed into the battery. The battery is then inserted into the hearing aid. The open-circuit voltage of a fresh zinc-air cell is typically 1.4 Volt. During use, the output voltage of the battery decreases slowly with time until the end of the battery life where the output voltage drops more rapidly. The life or operating period of the battery is the period within which the battery output voltage is greater than the minimum operating voltage of the circuit, the battery supplies. It is measured in ampere hours. In an analogue hearing aid, the minimum operating voltage is typically 0.9 Volt.

Prior art hearing aids may have a battery alarm circuit that alerts the user when the output voltage of the battery falls below a certain threshold voltage. Thus, the threshold in an analogue hearing aid is typically 0.9 Volt.

The emergence of hearing aids with digital circuitry, e.g. digital signal processors, has increased the demands on batteries used to power hearing aids. For example, the digital circuitry does not operate at a supply voltage below 1.1 Volt. Also the current needed to supply the digital circuitry increases rapidly as a function of increasing output volume of the hearing aid, and transient currents drawn by the digital circuitry tend to be larger and of shorter rise and fall times than transient currents drawn by analogue circuitry. This means that users of digital hearing aids experience a shortened battery life and in some cases even an extremely shortened battery life.

The document Neuteboom H et al: 'A DSP-BASED HEARING INSTRUMENT IC' IEEE JOURNAL OF SOLID-STATE CIRCUITS, IEEE INC. NEW YORK, US, vol. 32, no. 11, 1 November 1997, pages 1790-1806 discloses a hearing aid comprising a housing, an input transducer for transforming an acoustic input signal into a first electrical signal, a signal processor for generating a second electrical signal based on the first electrical signal, an output transducer for conversion of the second signal into sound, an energy source for supplying energy to at least the signal processor and a capacitor coupled in parallel with the energy source.

It is an object of the present invention to provide a hearing aid having an electronic circuit drawing low transient currents with slow rise and fall times so that a battery powering the hearing aid exhibits a long life, i.e. operating period.

According to the present invention, a hearing aid is provided having a housing holding an input transducer for transforming an acoustic input signal into a first electrical signal, a signal processor means for compensating a hearing deficiency by generation of a second electrical signal based on the first electrical signal, an output transducer for conversion of the second signal into sound, an energy source for supplying energy to at least the signal processor and at least one capacitor coupled in parallel with the energy-source for supply of transient currents drawn by the signal processor, the at least one capacitor comprising a super capacitor with a capacitance.

The signal processor may be a digital signal processor.

The capacitance of the at least one capacitor is preferably greater than 1 mF, more preferred greater than 4 mF, even more preferred greater than 10 mF, most preferred greater than 20 mF.

Preferably, the energy source is a metal-air battery, such as a zinc-air battery.

The at least one capacitor may comprise a fast super capacitor, e.g. an electrochemical double layer capacitor with a highly conductive polymeric, proton conductive electrolyte of the type disclosed in Technical Information, Bestcap a new dimension in "fast" supercapacitors, Scot Tripp, AVX Ltd, Fleet, UK.

Typically, a hearing aid has a housing holding the input and the output transducer and the signal processor and that is adapted to be worn, i.e. behind the ear, in the ear, or in the ear canal, and wherein the output of the output transducer is led to the eardrum in a way that is well-known in the art of hearing aids.

The terminals of the at least one capacitor is preferably connected across the battery terminals of the hearing aid.

In another embodiment, the terminals of the at least one capacitor is connected to the signal processor in such a way that the distance between the terminals and the power supply terminals of the signal processor is substantially minimised.

Still other objects of the present invention will become apparent to those skilled in the art from the following description wherein the invention will be explained in greater detail. By way of example, there is shown and described a preferred embodiment of this invention. As will be realised, the invention is capable of other different embodiments, and its several details are capable of modification in various, obvious aspects all without departing from the invention. Accordingly, the drawings and descriptions will be regarded as illustrative in nature and not as restrictive. In the drawing:
- Fig. 1: shows a plot of output voltage as a function of ampere-hours for two batteries loaded by a continuous current,
- Fig. 2: shows a plot of output voltage as a function of ampere-hours for two batteries loaded by a continuous current with superposed current pulses,
- Fig. 3: is a plot of the current drawn by a digital hearing aid amplifying speech and the resulting battery output voltage,
- Fig. 4: is a schematic diagram of a hearing aid according to the present invention,
- Fig. 5: is a plot of the current drawn by a digital hearing aid according to the present invention amplifying speech and the resulting battery output voltage,
- Fig. 6: is a plot of the current drawn by a digital hearing aid according to the present invention amplifying speech and the resulting battery output voltage,
- Fig. 7: is a schematic diagram of a hearing aid according to the present invention, comprising a telecoil, and
- Fig. 8: shows a plot of second harmonic distortion in a telecoil signal as a function of rotational position of three different zinc-air batteries.

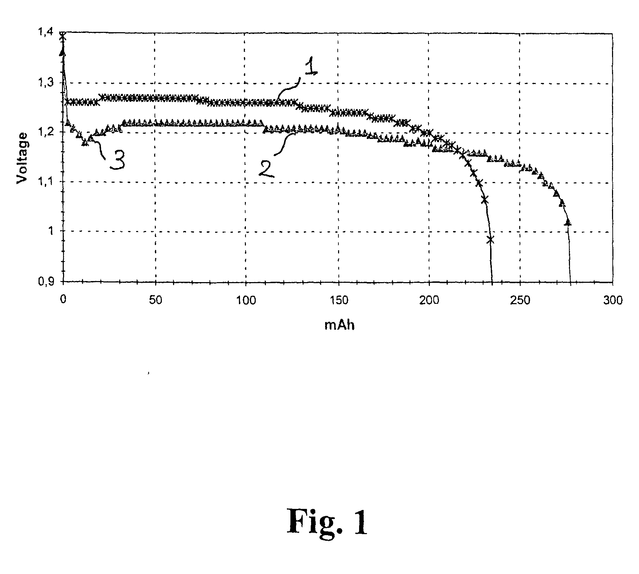

Fig. 1 shows a plot of output voltage 1, 2 as a function of ampere-hours for two batteries from different battery manufacturers loaded by a continuous current of 3.0 mA. The operating period of the battery is said to expire when the battery output voltage falls below 1.1 volt. It is seen that the battery with the highest output voltage 1 also has the shortest operating period. A short drop 3 in output voltage 2 at the start of operation of the other battery is also noted.

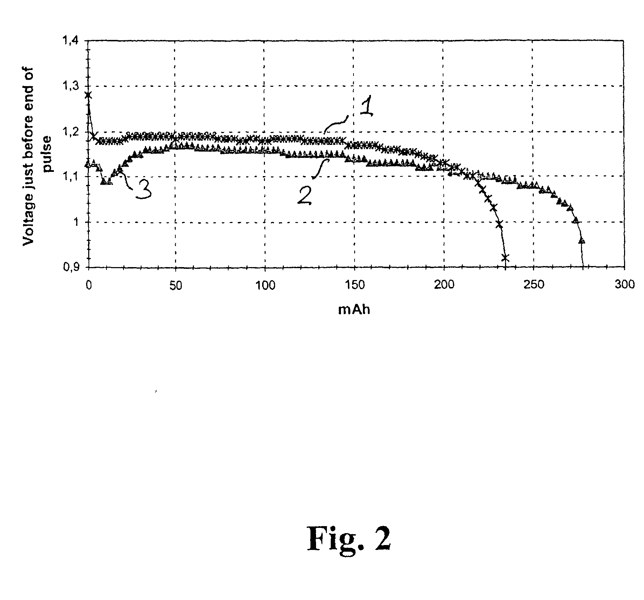

Fig. 2 shows a plot of output voltage 1, 2 as a function of ampere-hours for two batteries from the same battery manufacturers as Fig. 1, however, loaded with a more realistic current consisting of a continuous current of 3.0 mA superposed with 12 mA current pulses with 100 ms duration. The period between pulses is one hour. It is noted that for both batteries, the output voltages 1, 2 have dropped while the operating period of the battery with the highest output voltage 1 remained unchanged and the operating period of the other battery decreased to the same value. It is also noted that the short drop 3 in output voltage 2 at the start of operation of the other battery has become deeper and that the battery output voltage 2 falls below 1.1 volt during the drop 3. Thus, a hearing aid user using this battery under these circumstances would experience an extremely short operating period of 1-2 hours.

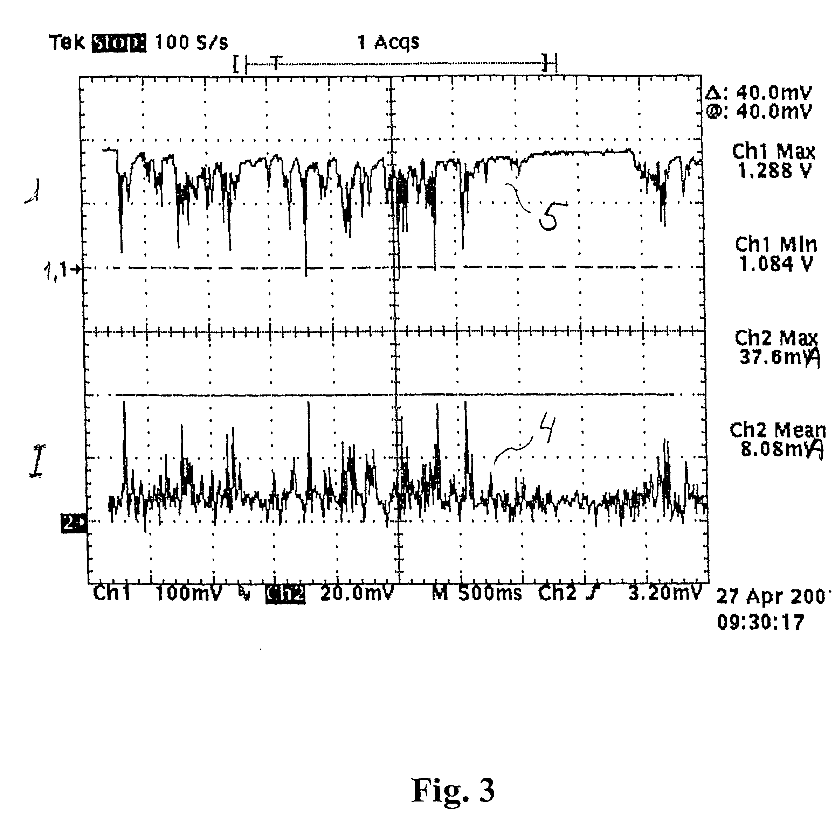

Fig. 3 is a plot of the current 4 drawn by a prior art digital hearing aid amplifying speech and the resulting battery output voltage 5. The speech signal is the artificial speech signal from the ICRA noise CD developed by the International Colloquium of Rehabilitative Audiology. It should be noted that the battery output voltage falls below 1.1 volt whereby the battery alarm is triggered forcing or urging the hearing aid user to replace the battery.

The voltage drops and corresponding lack of ability of the battery to supply the required current pulse also creates distortion of the output signal of the signal processor.

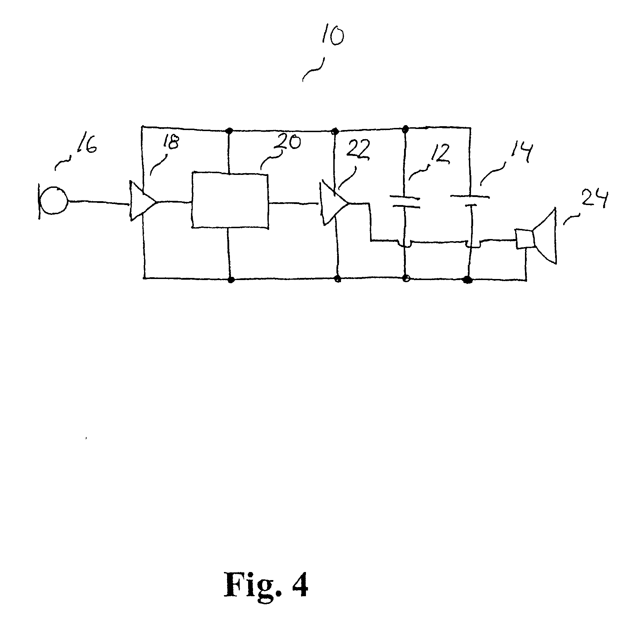

Fig. 4 shows a schematic diagram of a hearing aid 10 with a capacitor 12 connected in parallel with the battery 14 according to the present invention. The hearing aid 10 comprises a microphone 16 constituting the input transducer for reception of sound from the environment and generation of a corresponding electronic signal. The microphone 16 may be of a directional type, e.g. the input transducer may comprise more than one microphone, wherein several input signals are combined into a single signal. The electronic signal is fed to a digital signal processor 20 via an A/D converter 18. If appropriate, the A/D converter 18 may be preceded by a preamplifier (not shown). The digital signal processor 20 processes the signal according to a desired frequency characteristic and compressor function to provide an output signal suitable for compensating the hearing impairment of the user. The output signal is fed to an output transducer 24 through a sigma-delta converter 22. The output transducer 24 converts the output signal to an acoustic output signal. The capacitance of the capacitor 12 is 5 mF.

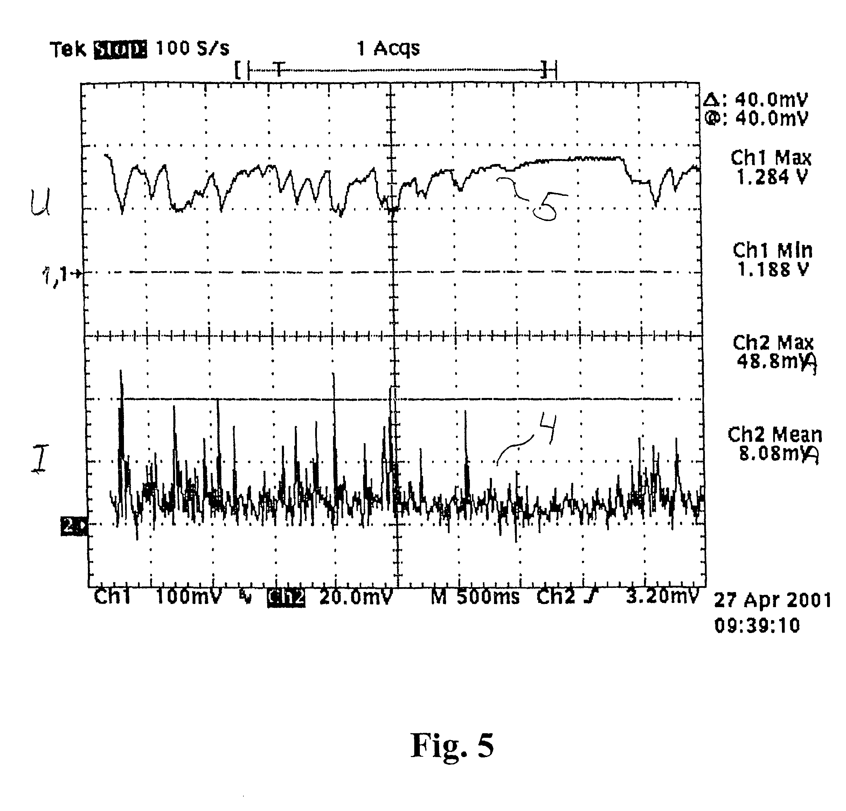

Fig. 5 corresponds to Fig. 3 and is a plot of the current 4 drawn by a digital hearing aid according to the present invention during amplification of ICRA artificial speech, and of the resulting battery output voltage 5. Comparing with Fig. 3, it is seen that the battery output voltage 5 is smoothened and that the voltage no longer drops below 1.1 volt. Thus, with a hearing aid according to the present invention, the operating period of the battery has been prolonged compared to prior art digital hearing aids. Further, the smaller variations in voltage lead to less distortion of the output signal of the signal processor.

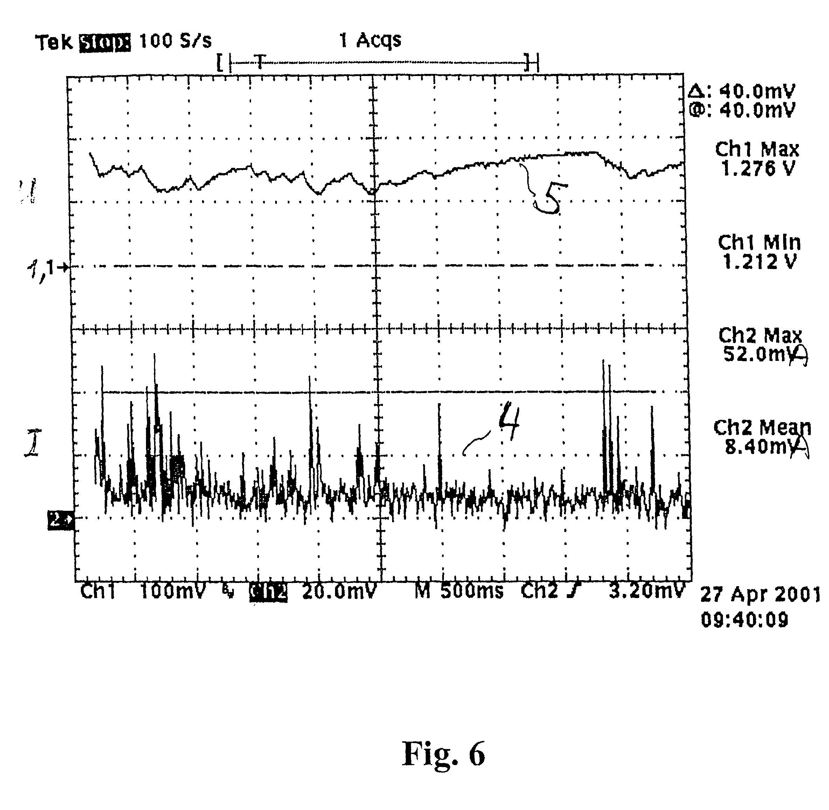

Fig. 6 shows another plot corresponding to the plot shown in Fig. 5, wherein the capacitance is 20 mF. It is seen that voltage 5 variations decrease further.

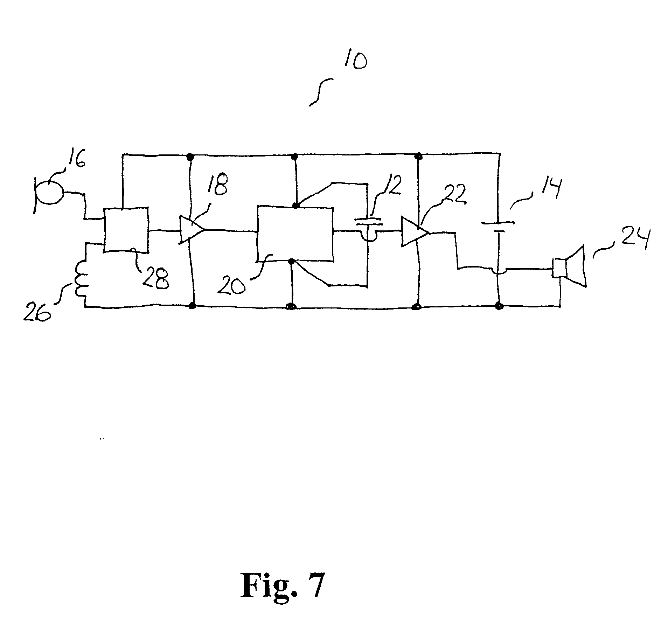

Fig. 7 is a schematic diagram of a hearing aid 10 according to the present invention, comprising a pick-up coil, namely telecoil 26. The microphone 16 and the telecoil 26 are connected to a mixer stage 28 and the output of the mixer stage 28 is connected to the A/D converter 18. In a hearing aid 10 with a telecoil 26, the inclusion of a capacitor 12, such as a supercapacitor 12, for energy supply has a further effect. The currents drawn by the hearing aid circuitry 18, 20, 22 creates a magnetic field in the surroundings. This field is picked up by the telecoil 26 and distorts the telecoil signal. Second harmonic distortion may amount to 30 %. In some prior art hearing aids this has been compensated by adding a compensating current path to the power supply current loop so that the generated magnetic field is lowered. However, the compensating current path is designed under the assumption of a specific power supply current loop geometry. The present inventor has shown that this geometry changes with the rotational position of the battery. In a zinc-air battery there is air above the zinc powder. This means that current flowing from the bottom of the battery cannot find a direct linear path to the top of the battery because of this air. In stead, the current has to travel around the air volume.

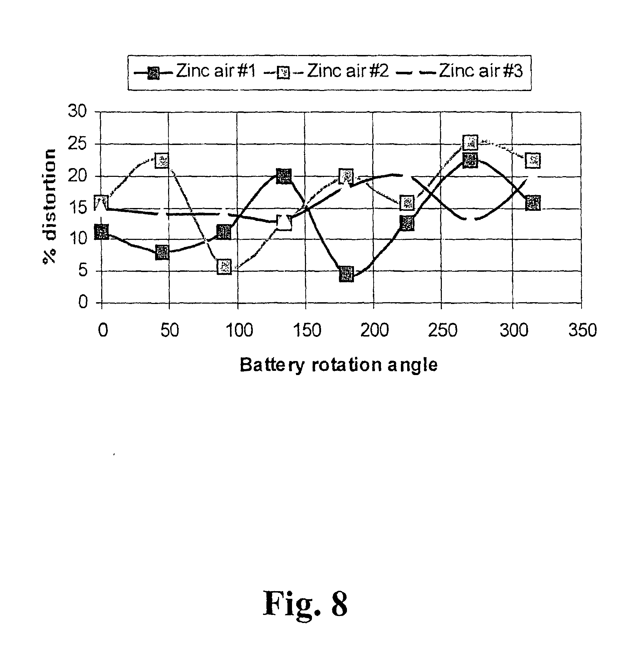

Fig. 8 shows a plot of second harmonic distortion in the telecoil signal as a function of rotational position of three different zinc-air batteries. It is seen that the amount of distortion is different for different batteries and so is the minimum obtainable amount of distortion. When a high capacitance capacitor is connected to the circuitry to supply current transients to the circuitry, a well defined current path for the current transients generating the high magnetic fields picked up by the telecoil is established. Then it is possible to design of a compensating current path that is substantially independent of battery type, battery manufacturing process, and of the rotational position of the battery.

Further, in Fig. 7, the connections of the capacitor is drawn to illustrate that the capacitor may be connected to the circuitry in such a way that the area of the current loop through which the transient currents flow is minimised thereby further minimising the magnetic fields generated by the transient currents.

## Claims

1. A hearing aid (10) comprising a housing, an input transducer (16) for transforming an acoustic input signal into a first electrical signal, a signal processor means (20) for compensating a hearing deficiency by generation of a second electrical signal based on the first electrical signal, an output transducer (24) for conversion of the second signal into sound, an energy source (14) for supplying energy to at least the signal processor (20) and at least one capacitor (12) **characterized in that** the at least one capacitor (12) is coupled in parallel with the energy source (14) for supply of transient currents drawn by the signal processor (20), and that the at least one capacitor (12) comprises a super capacitor with a capacitance.

2. A hearing aid (10) according to claim 1, wherein the signal processor (20) is a,digital signal processor.

3. A hearing aid (10) according to claim 1 or 2, wherein the energy source (14) is a metal-air battery.

4. A hearing aid (10) according to any of the preceding claims, wherein the energy source (14) is a zinc-air battery.

5. A hearing aid (10) according to any of the preceding claims, wherein the capacitance of the at least one capacitor (12) is greater than 1 mF.

6. A hearing aid (10) according to any of the preceding claims, wherein the capacitance of the at least one capacitor (12) is greater than 4 mF.

7. A hearing aid (10) according to any of the preceding claims, wherein the capacitance of the at least one capacitor (12) is greater than 10 mF.

8. A hearing aid (10) according to any of the preceding claims, wherein the capacitance of the at least one capacitor (12) is greater than 20 mF.

9. A hearing aid (10) according to any of the preceding claims, wherein the at least one capacitor (12) is an electrochemical double layer capacitor with a conductive polymeric, proton conductive electrolyte.

10. A hearing aid (10) according to any of the preceding claims, wherein the terminals of the at least one capacitor(12) is connected to the signal processor (20) in such a way that the distance between the capacitor terminals and the power supply terminals of the signal processor (20) is minimised.

11. A hearing aid (10) according to claim 10, further comprising a telecoil (26).

12. A hearing aid (10) according to claim 11, comprising means for adding a compensation current to lower the generated magnetic field.

13. A hearing aid (10) according to claim 11, comprising a mixer (28) for mixing the first signal with the signal from the telecoil (26), and means for feeding the mixer output signal to the signal processor means (20).

## Patentansprüche

1. Hörgerät (10), umfassend ein Gehäuse, einen Eingangswandler (16) zum Umwandeln eines akustischen Eingangssignals in ein erstes elektrisches Signal, eine Signalprozessoreinrichtung (20) zum Kompensieren eines Hörfehlers durch Erzeugen eines zweiten elektrischen Signals basierend auf dem ersten elektrischen Signal, einen Ausgangswandler (24) zum Umwandeln des zweiten Signals in Schall, eine Energiequelle (14) für die Energieversorgung wenigstens des Signalprozessors (20), und wenigstens einen Kondensator (12), **dadurch gekennzeichnet, dass** der wenigstens eine Kondensator (12) parallel zur Energiequelle (14) angeschlossen ist, um vom Signalprozessor (20) gezogene Ausgleichsströme bereitzustellen, und dass der wenigstens eine Kondensator (12) einen Superkondensator mit einer Kapazität umfasst.

2. Hörgerät (10) nach Anspruch 1, wobei der Signalprozessor (20) ein digitaler Signalprozessor ist.

3. Hörgerät (10) nach Anspruch 1 oder 2, wobei die Energiequelle (14) eine Metall-Luft-Batterie ist.

4. Hörgerät (10) nach einem der vorhergehenden Ansprüche, wobei die Energiequelle (14) eine Zink-Luft-Batterie ist.

5. Hörgerät (10) nach einem der vorhergehenden Ansprüche, wobei die Kapazität des wenigstens einen Kondensators (12) größer als 1 mF ist.

6. Hörgerät (10) nach einem der vorhergehenden Ansprüche, wobei die Kapazität des wenigstens einen Kondensators (12) größer als 4 mF ist.

7. Hörgerät (10) nach einem der vorhergehenden Ansprüche, wobei die Kapazität des wenigstens einen Kondensators (12) größer als 10 mF ist.

8. Hörgerät (10) nach einem der vorhergehenden Ansprüche, wobei die Kapazität des wenigstens einen Kondensators (12) größer als 20 mF ist.

9. Hörgerät (10) nach einem der vorhergehenden Ansprüche, wobei der wenigstens eine Kondensator (12) ein elektrochemischer Doppelschichtkondensator mit einem leitfähigen protonenleitenden Polymerelektrolyt ist.

10. Hörgerät (10) nach einem der vorhergehenden Ansprüche, wobei die Anschlüsse des wenigstens einen Kondensators (12) derart an den Signalprozessor (20) angeschlossen sind, dass der Abstand zwischen den Kondensatoranschlüssen und den Energieversorgungsanschlüssen des Signalprozessors (20) minimiert ist.

11. Hörgerät (10) nach Anspruch 10, ferner umfassend eine Telespule (26).

12. Hörgerät (10) nach Anspruch 11, umfassend Mittel zum Hinzufügen eines Kompensationsstroms, um das erzeugte Magnetfeld abzusenken.

13. Hörgerät (10) nach Anspruch 11, umfassend einen Mischer (28) zum Mischen des ersten Signals mit dem Signal von der Telespule (26), sowie Mittel zum Zuführen des Mischerausgangssignals zur Signalprozessoreinrichtung (20).

## Revendications

1. Une prothèse auditive (10) comprenant un boîtier, un transducteur d'entrée (16) pour transformer un signal d'entrée acoustique en un premier signal électrique, un moyen de traitement de signal (20) pour compenser une déficience auditive par génération d'un deuxième signal électrique basé sur le premier signal électrique, un transducteur de sortie (24) pour la conversion du deuxième signal en un son, une source d'énergie (14) pour fournir de l'énergie au moins au processeur de signal (20) et au moins un condensateur (12), **caractérisée en ce qu'**au moins un condensateur (12) est couplé en parallèle avec la source d'énergie (14) pour fournir des courants transitoires amenés par le processeur de signal (20) et **en ce qu'**au moins un condensateur (12) comprend un super condensateur avec une capacité.

2. Une prothèse auditive (10) selon la revendication 1, dans laquelle le processeur de signal (20) est un processeur de signal numérique.

3. Une prothèse auditive (10) selon la revendication 1 ou 2, dans laquelle la source d'énergie (14) est une pile métal-air.

4. Une prothèse auditive (10) selon l'une quelconque des revendications précédentes, dans laquelle la source d'énergie (14) est une pile zinc-air.

5. Une prothèse auditive (10) selon l'une quelconque des revendications précédentes, dans laquelle la capacité d'au moins un condensateur (12) est supérieure à 1 mF.

6. Une prothèse auditive (10) selon l'une quelconque des revendications précédentes, dans laquelle la capacité d'au moins un condensateur (12) est supérieure à 4 mF.

7. Une prothèse auditive (10) selon l'une quelconque des revendications précédentes, dans laquelle la capacité d'au moins un condensateur (12) est supérieure à 10 mF.

8. Une prothèse auditive (10) selon l'une quelconque des revendications précédentes, dans laquelle la capacité d'au moins un condensateur (12) est supérieure à 20 mF.

9. Une prothèse auditive (10) selon l'une quelconque des revendications précédentes, dans laquelle au moins un condensateur (12) est un condensateur double couche électrochimique avec un électrolyte conducteur de protons, polymère conducteur.

10. Une prothèse auditive (10) selon l'une quelconque des revendications précédentes, dans laquelle les bornes d'au moins un condensateur (12) sont reliées au processeur de signal (20) afin que la distance entre les bornes du condensateur et les bornes d'alimentation de puissance du processeur de signal (20) soit minimisée.

11. Une prothèse auditive (10) selon la revendication 10, comprenant, en outre, une télébobine (26).

12. Une prothèse auditive (10) selon la revendication 11, comprenant un moyen pour ajouter un courant de compensation pour abaisser le champ magnétique généré.

13. Une prothèse auditive (10) selon la revendication 11, comprenant un mélangeur (28) pour mélanger le premier signal avec le signal de la télébobine (26) et un moyen pour amener le signal de sortie du mélangeur au moyen de traitement de signal (20).
